# EUROPEAN PATENT APPLICATION

(11) **EP 2 797 039 A1**
(43) Date of publication of application: **29.10.2014**
(21) Application number: 14165576.1
(22) Date of filing: 23.04.2014
(51) Int. Cl.: G06Q 10/00

(54) **Memo management method and electronic device of the same**

(30) Priority: 23.04.2013 KR 20130044600
(71) Applicant: Samsung Electronics Co., Ltd, Gyeonggi-do 443-742 (KR)
(72) Inventor: Kim, Han-Jib, Gyeonggi-do (KR); Hwang, Soo-Ji, Gyeonggi-do (KR)
(74) Representative: Gover, Richard Paul

(57) **Abstract**

An apparatus and a method for managing a memo in an electronic device are provided. The method of managing a memo in an electronic device includes generating a memo service while providing a call service to another electronic device, displaying screens of the call service and the memo service in a superimposed manner, and, when a memo is stored through the memo service, storing the memo including contact information of the another electronic device.

## Description

### TECHNICAL FIELD

The present disclosure relates to an apparatus and method for managing a memo in an electronic device.

### BACKGROUND

Due to development of communication technologies, mobile electronic devices have evolved into multimedia devices providing various multimedia services using data communication service as well as voice call service. Also, the electronic devices may provide various services such as a camera function, an internet function, an MP3 player function, a scheduling function, and a memo function.

When needing to write a memo in an electronic device which is providing the call service with a first electronic device, a user of the electronic device converts a call service screen into a memo service screen and then the user writes a necessary memo. When the electronic device includes a touch screen, the user of the electronic device may write a memo with a pen or at least one inputting device such as a touch input. In addition, the user of the electronic device may write a memo with a separate input device.

As described above, the user of the electronic device needs to convert a call service screen into a memo service screen for writing a memo during use of the call service. Accordingly, a smooth video call with a user of another electronic device is affected by the conversion of the call service screen into the memo service screen for writing the memo.

Furthermore, since a memo written during use of the call service does not include call log information, the user of the electronic device needs to memorize the call log information if the user wants to use the call log information when writing the memo. Therefore, an improved method for managing memos written while providing a call service is required.

The above information is presented as background information only to assist with an understanding of the present disclosure. No determination has been made, and no assertion is made, as to whether any of the above might be applicable as prior art with regard to the present disclosure.

### SUMMARY

Aspects of the present disclosure are to address at least the above-mentioned problems and/or disadvantages and to provide at least the advantages described below. Accordingly, an aspect of the present disclosure is to provide a method and apparatus for providing memo service in an electronic device while providing a call service with another electronic device.

Another aspect of the present disclosure is to provide a method and apparatus for displaying a call service screen and a memo service screen in a superimposed manner in an electronic device.

Another aspect of the present disclosure is to provide a method and apparatus for storing a memo based on information on an electronic device while providing a call service in another electronic device.

Another aspect of the present disclosure is to provide a method and apparatus for displaying a memo for an electronic device and a call service screen in a superimposed manner in another electronic device.

In accordance with an aspect of the present disclosure, a method of managing a memo in an electronic device is provided. The method includes generating a memo service while providing a call service to another electronic device, displaying screens of the call service and memo service in a superimposed manner, and when a memo is stored through the memo service, storing the memo including contact information corresponding to the another electronic device.

In accordance with an aspect of the present disclosure, the method is wherein the storing of the memo comprises storing the memo by mapping the contact information to the memo.

In accordance with an aspect of the present disclosure, the method is wherein the displaying of the screens comprises adjusting transparency of the memo service screen and displaying the memo service screen on the call service screen in a superimposed manner.

In accordance with another aspect of the present disclosure, a method of managing a memo in an electronic device is provided. The method includes when providing a service including contact information, confirming that at least one piece of information including a memo exists; and when the information including the memo exists, displaying at least one icon according to a type of the memo.

In accordance with an aspect of the present disclosure, the method is further comprising, when selection for the icon is detected, displaying the memo.

In accordance with another aspect of the present disclosure, a method of managing a memo in an electronic device is provided. The method includes when providing a memo service, confirming that at least one memo including contact information exists, and when the memo including the contact information exists, displaying at least one icon according to a type of the contact information.

In accordance with an aspect of the present disclosure, the method is further comprising, when selection for the icon is detected, attempting to contact a party corresponding to the contact information.

In accordance with another aspect of the present disclosure, a method of managing a memo in an electronic device is provided. The method includes providing a call service to another electronic device, confirming that a memo including contact information corresponding to the another electronic device exists, and when the memo exists, displaying a screen of the call service and content of the memo in a superimposed manner.

In accordance with an aspect of the present disclosure, the method is further comprising, when the memo exists, displaying at least one icon on the call service screen according to a type of the memo.

In accordance with an aspect of the present disclosure, the method is wherein the displaying of the screen comprises: when many memos exist, displaying at least one memo from among the many memos; and when a preset input for another memo from among the many memos is detected, displaying the another memo except the displayed at least one memo.

In accordance with another aspect of the present disclosure, an electronic device is provided. The electronic device includes a display unit, at least one processor, at least one memory, and at least one program stored in the at least one memory and configured to be executed by the at least one processor, wherein the at least one processor, drives or generates a memo service while providing a call service, displays screens of the call service and memo service in a superimposed manner, and when storing a memo through the memo service, stores the memo including contact information of the another electronic device.

In accordance with an aspect of the present disclosure, the devices is wherein the at least one processor maps the contact information to the memo and stores the memo.

In accordance with an aspect of the present disclosure, the devices is wherein the display unit adjusts transparency of the memo service screen to display the memo service screen on the call service screen in a superimposed manner.

In accordance with another aspect of the present disclosure, an electronic device is provided. The electronic device includes a display unit, at least one processor, at least one memory, and at least one program stored in the at least one memory and configured to be executed by the at least one processor, wherein the program, when providing a service including contact information, confirms that at least one piece of information including a memo exists, and when the contact information including the memo exists, displays at least one icon.

In accordance with an aspect of the present disclosure, the devices is wherein the at least one processor, when selection for the at least one icon is detected, displays the memo.

In accordance with another aspect of the present disclosure, an electronic device is provided. The electronic device includes a display unit, at least one processor, at least one memory, and at least one program stored in the at least one memory and configured to be executed by the at least one processor, wherein the at least one processor, when providing a memo service, confirms that at least one memo including contact information exists, and when the memo including the contact information exists, displays at least one icon according to a type of the contact information.

In accordance with an aspect of the present disclosure, the devices is wherein, when selection for the icon is detected, the at least one processor attempts to contact another electronic device corresponding to the contact information.

In accordance with another aspect of the present disclosure, an electronic device is provided. The electronic device includes a display unit, at least one processor, at least one memory, and at least one program stored in the at least one memory and configured to be executed by the at least one processor, wherein the at least one processor, provides a call service to another electronic device, confirms that a memo including contact information on the another electronic device exists, and when the memo exists, displays a screen of the call service and content of the memo in a superimposed manner.

In accordance with an aspect of the present disclosure, the devices is wherein, when the memo exists, the at least one processor displays at least one icon on the call service screen according to a type of the memo.

In accordance with an aspect of the present disclosure, the devices is wherein, when many memos exist, the at least one processor displays at least one memo from among the many memos, and when a preset input for a memo among the many memos is detected, the processor displays the memo except the displayed at least one memo.

Other aspects, advantages, and salient features of the disclosure will become apparent to those skilled in the art from the following detailed description, which, taken in conjunction with the annexed drawings, discloses various embodiments of the present disclosure.

### BRIEF DESCRIPTION OF THE DRAWINGS

The above and other aspects, features, and advantages of certain embodiments of the present disclosure will be more apparent from the following description taken in conjunction with the accompanying drawings, in which:
FIG. 1 illustrates a block configuration of an electronic device according to an embodiment to the present disclosure;
FIG. 2 illustrates a detailed block configuration of a processor according to an embodiment of the present disclosure;
FIG. 3 illustrates a procedure for managing a memo written while providing a call service in an electronic device according to an embodiment of the present disclosure;
FIG. 4 illustrates a procedure for managing a memo written while providing a call service in an electronic device according to another embodiment of the present disclosure;
FIG. 5 illustrates a procedure for displaying a memo for a first electronic device when providing a call service in an electronic device according an embodiment of the present disclosure;
FIG. 6 illustrates a procedure for displaying a memo for a first electronic device when providing a call service in an electronic device according to an embodiment of the present disclosure;
FIG. 7 illustrates a procedure for displaying a memo for a first electronic device when providing a call service in an electronic device according to another embodiment of the present disclosure; and
FIGS. 8A, 8B, 8C, 8D, and 8E illustrate screen configurations for managing memos stored while providing a call service in an electronic device according to an embodiment of the present disclosure.

Throughout the drawings, it should be noted that like reference numbers are used to depict the same or similar elements, features, and structures.

### DETAILED DESCRIPTION

The following description with reference to the accompanying drawings is provided to assist in a comprehensive understanding of various embodiments of the present disclosure as defined by the claims and their equivalents. It includes various specific details to assist in that understanding but these are to be regarded as merely exemplary. Accordingly, those of ordinary skill in the art will recognize that various changes and modifications of the various embodiments described herein can be made without departing from the scope and spirit of the present disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the present disclosure. Accordingly, it should be apparent to those skilled in the art that the following description of various embodiments of the present disclosure is provided for illustration purpose only and not for the purpose of limiting the present disclosure as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

The present disclosure relates to a technology for managing a memo based on at least one of a call log and an address book in an electronic device.

An electronic device to be described below may include a mobile communication terminal, a Personal Digital Assistant (PDA), a Personal Computer (PC), a laptop, a smartphone, a netbook, a television, a Mobile Internet Device (MID), an Ultra Mobile PC (UMPC), a tablet PC, a navigation unit, a smart TV, an MP3 player, and the like.

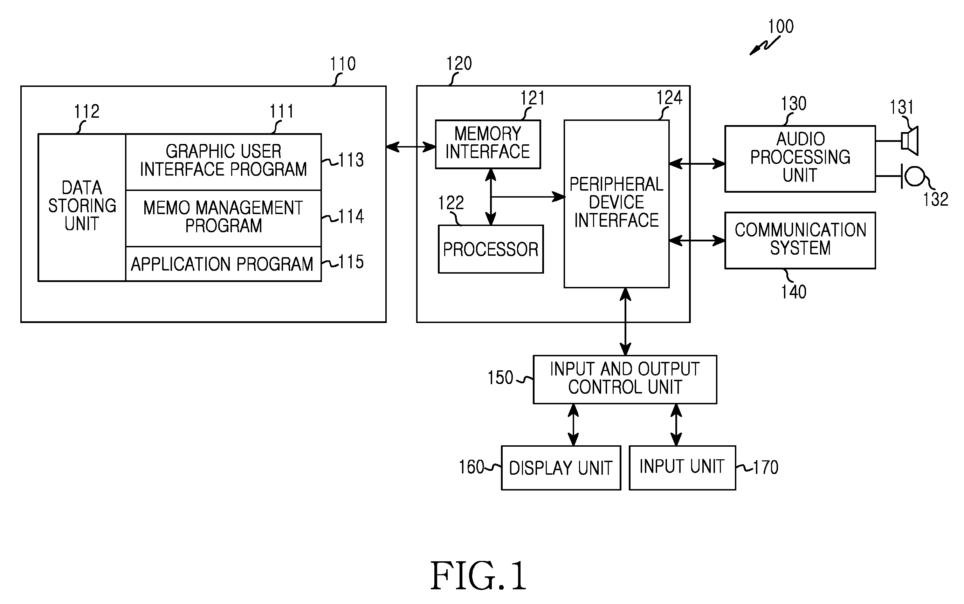

FIG. 1 illustrates a block configuration of an electronic device according to an embodiment of the present disclosure.

As shown in FIG. 1, the electronic device 100 may include a memory 110, a processor unit 120, an audio processing unit 130, a communication system 140, an input and output controller or control unit 150, a display unit 160, and an input device 170. Here, the memory 110 may exist in plural.

Hereinafter, each element will be described.

The memory 110 may include a program storing unit 111 storing a program for controlling operations of the electronic device 100, and a data storing unit 112 storing data generated during program execution. For example, the data storing unit 112 stores call logs, an address book, and memos, but is not limited thereto.

The program storing unit 111 may include a Graphic User Interface (GUI) program 113, a memo management program 114, and at least one application program 115, but is not limited thereto. Here, programs stored in the program storing unit 111 may be represented as instruction sets of sets of instructions.

The GUI program 113 may include at least one software element for graphically providing a user interface on the display unit 160. For example, the GUI program 113 may include instructions for displaying content of a memo, which is output from the memo management program 114, and a call service screen on the display unit 160 in a superimposed manner. In another example, the GUI program 113 may include instructions for displaying an icon of a memo, which is output from the memo management program 114, and the call service screen on the display unit 160 in a superimposed manner.

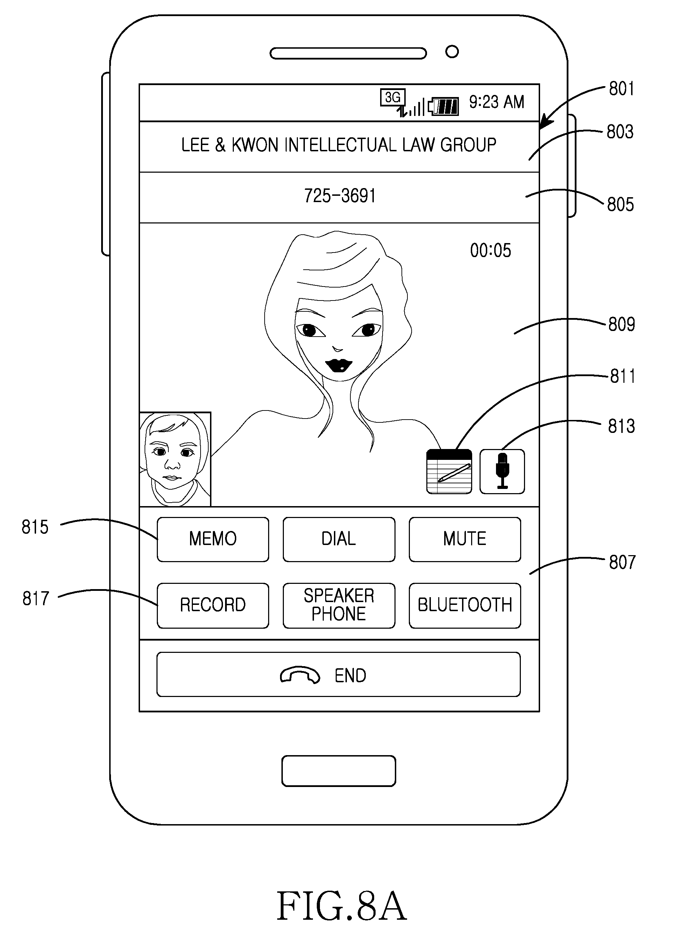

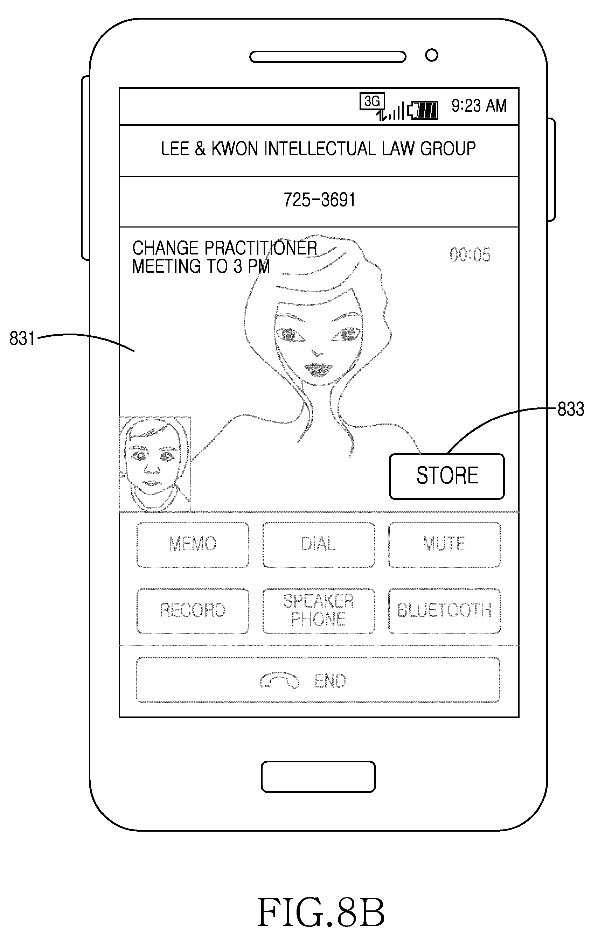

The memo management program 114 may include at least one software element for providing memo service while providing a call service with a first electronic device. For example, as shown in FIG. 8A, the memo management program 114 drives memo service when selection for "memo" 815 is detected on a menu screen 807 of a screen 801 of the call service according to input information provided through the input device or input unit 170. As shown in FIG. 8B, the memo management program 114 controls to display a screen 831 of memo service and the call service screen 801 in a superimposed manner through the GUI program 113. Additionally, the memo management program 114 may control to display a separate virtual keypad, which allows a user to input content through the memo service screen 831, and the call service screen 801 in a superimposed manner through the GUI program 113. Then, as shown in FIG. 8B, when selection of "store" 833 is detected on the memo service screen 831 according to input information provided through the input device 170, the memo management program 114 stores, in the memory 112, content of the memo input through the memo service screen 831 such as the name "Lee & Kwon Intellectual Law Group" 803. The memo management program 114 may also store, in the memory 112, the content of the memo input through the memo service screen 831 such as a phone number 805 of "Lee & Kwon Intellectual Law Group" 803.

The memo management program 114 may include at least one software element for displaying memo content while providing a call service with the first electronic device. For example, when receiving call data through the communication system 140, the memo management program 114, as shown in FIG. 8A, may confirm at least one of a phone number 805 of the first electronic device and a name 803 stored in the electronic device for the phone number of the first electronic device. Then, the memo management program 114 confirms that a memo for at least one of the name "Lee & Kwon Intellectual Law Group" 803 and number "725-3691" 805 is stored. When the memo for at least one of the name "Lee & Kwon Intellectual Law Group" 803 and the number "725-3691" 805 is stored, the memo management program 114 may control to display content 831 of the memo for the name "Lee & Kwon Intellectual Law Group" 803 and the call screen 809 of the call service in a superimposed manner. When many memos for the first electronic device exist, the memo management program 114 controls to display the latest stored memo from among the memos for the first electronic device. Also, the memory management program 114 may sequentially confirm the memos according to input information provided through the input device 170.

Additionally, when the memos for the first electronic device exist, the memo management program 114 may control to display at least one of a memo icon 811 and a voice memo icon 813 according to types of memos stored through the GUI program 113, as shown in FIG. 8A. Then, when selection for the memo icon 811 is detected, the memo management program 114 may control to display a call service screen and memo content in a superimposed manner.

The application program 115 may include a software element for at least one application program installed in the electronic device 100.

The processor unit 120 may include a memory interface 121, at least one processor 122, and a peripheral device interface 124. Here, the memory interface 121, the at least one processor 122, and the peripheral device interface 124 included in the processor unit 120 may be implemented as integrated into at least one integrated circuit or as separate elements.

The memory interface 121 controls access of an element such as the processor 122 or the peripheral device interface 124 to the memory 110.

The peripheral device interface 124 controls connection of an input and output peripheral device of the electronic device 100 to the processor 122 and the memory interface 121.

The processor 122 controls the electronic device 100 to provide various multimedia services by using at least one software program. The processor 122 executes at least one program stored in the memory 110 to provide services corresponding to the executed program.

The audio processing unit 130 provides an audio interface between a user and the electronic device 100 through a speaker 131 and a microphone 132, but is not limited thereto.

The communication system 140 performs a communication function for voice and data communications. The communication system 140 may be divided into a plurality of communication sub-modules supporting different communication networks. For example, the communication network may include, but is not limited to, a Global System for Mobile communications (GSM) network, an Enhanced Data rates for GSM Evolution (EDGE) network, a Code Division Multiple Access (CDMA) network, a Wideband -CDMA (W-CDMA) network, a Long Term Evolution (LTE) network, an Orthogonal Frequency-Division Multiplexing (OFDM) network, a Wi-Fi network, a wireless LAN, a Bluetooth network and a Near Field Communication (NFC) network.

The input and output control unit 150 provides an interface between an input and output device of the display unit 160 and the input unit 170, and the peripheral device interface 124.

The display unit 160 displays state information of the electronic device 100, characters input by a user, moving pictures, still images, and the like. For example, the display unit 160 displays application information driven by the processor 122.

The input device 170 provides input data generated by the user's selection to the processor unit 120 through the input and output control unit 150. The input device 170 may include a keypad including at least one hardware button and a touch pad detecting touch information. For example, the input device 170 provides the touch information detected through the touch pad to the processor 122 through the input and output control unit 150.

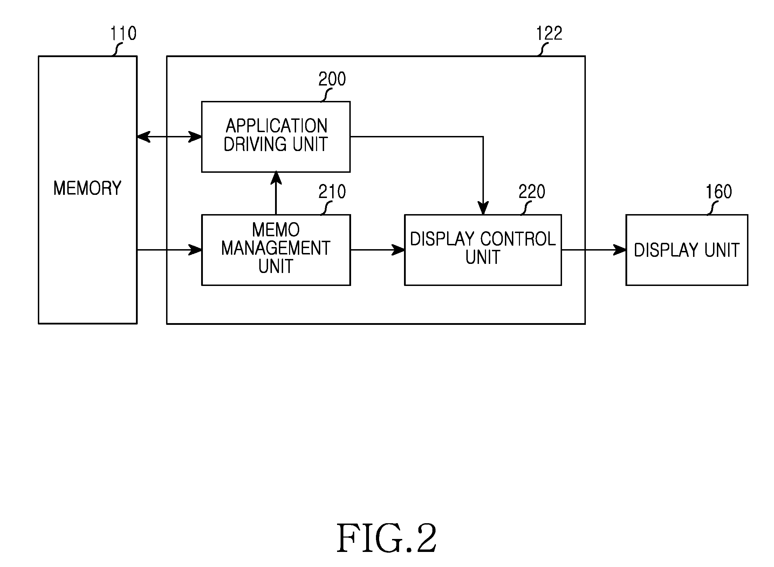

FIG. 2 illustrates a detailed block configuration of a processor according to an embodiment of the present disclosure.

As shown in FIG. 2, the processor 122 may include an application program driving unit 200, a memo management unit 210, and a display control unit 220.

The application program driving unit 200 executes at least one application program 115 stored in the program storing unit 111 and provides a corresponding service according to the executed application program 115. For example, the application program driving unit 200 controls the memo management unit 210 to provide the memo service.

The memo management unit 210 executes a memo management program stored in the program storing unit 111 and provides the memo service while providing the call service with the first electronic device. For example, as shown in FIG. 8A, the memo management unit 210 drives memo service, when selection for "memo" 815 is detected on a menu screen 807 of a call service screen 801 according to input information provided through the input device 170. The menu screen may also include other services such as "record" 817, "dial," "speaker phone," "mute," "Bluetooth," and the like. The memo management unit 210, controls to display a memo service screen 831 and the call service screen 801 in a superimposed manner, as shown in FIG. 8B, through the display control unit 220. Additionally, the memo management unit 210 may also control to display a separate virtual keypad, which allows a user to input content through the memo service screen 831, and the call service screen 801 in a superimposed manner as shown in FIG. 8B. Then, as shown in FIG. 8B, when selection for "store" 833 is detected on the memo service screen 831 according to input information provided through the input device 170, the memo management unit 210 stores the content of the memo input through the memo service screen 831 such as the name "Lee & Kwon Intellectual Law Group" 803. The memo management unit 210 may also store the content of the memo input through the memo service screen 831 such as a phone number 805 of "Lee & Kwon Intellectual Law Group" 803.

The memo management unit 210 executes a memo management program 114 stored in the program storing unit 111 and displays content of a memo while providing the call service with the first electronic device. For example, when receiving call data through the communication system 140, the memo management unit 210, as shown in FIG. 8A, may confirm at least one of a phone number 805 of the first electronic device and a name 803 stored for the phone number of the first electronic device in the electronic device. Then, the memo management unit 210 confirms that a memo for at least one of the name "Lee & Kwon Intellectual Law Group" 803 and for the number "725-3691" 805 is stored in the electronic device. When the memo for the at least one of the name "Lee & Kwon Intellectual Law Group" 803 and for the number "725-3691" 805 is stored in the electronic device, the memo management unit 210, as shown in FIG. 8B, controls to display content 831 of a memo for "Lee & Kwon Intellectual Law Group" 803 and the call service screen 801 in a superimposed manner through the display control unit 220. When many memos for the first electronic device exist, the memo management unit 210 may display the latest stored memo from among the many memos for the first electronic device. Also, the memo management unit 210 may sequentially confirm the many memos according to input information provided through the input device 170.

Additionally, when a memo for the first electronic device exists, the memo management unit 210 may display at least one of a memo icon 811 and a voice memo icon 813 according to a type of stored memo, as shown in FIG. 8A. Then, when selection for the memo icon 811 is detected, the memo management unit 210 may display a call service screen and the content of the memo in a superimposed manner.

The display control unit 220 executes the GUI program 113 stored in the program storing unit 111 and graphically displays a user interface on the display unit 160. For example, the display control unit 220 may include instructions for allowing the memo management unit 210 to display content of a memo and the call service screen 801 on the display unit 160 in a superimposed manner. In another example, the display control unit 220 may include instructions for allowing the memo management unit 210 to display the memo icon 811 and the call service screen 801 on the display unit 160 in a superimposed manner.

In the above described embodiment, the electronic device 100 includes the memo management unit 210 and provides memo service while providing a call service by using the processor 122.

In another embodiment, the electronic device 100 may include a separate service control module providing memo service while providing a call service.

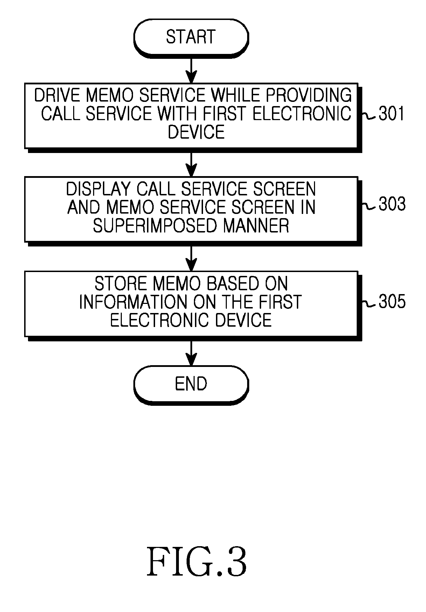

FIG. 3 illustrates a procedure for managing a memo written while providing the call service in an electronic device according to an embodiment of the present disclosure.

Referring to FIG. 3, in operation 301, the electronic device drives memo service while providing the call service with another or a first electronic device. Here, the call service may include at least one of voice call service and video call service. Also, the call service may include at least one of an incoming call and an outgoing call. For example, as shown in FIG. 8A, the electronic device drives memo service when selection for "memo" 815 is detected on a menu screen 807 of the call service screen 801 according to the input information provided through the input device 170.

After the memo service is driven, the electronic device proceeds to operation 303 and displays the call service screen and a memo service screen in a superimposed manner. For example, as shown in FIG. 8B, the electronic device displays the memo service screen 831 and the call service screen 801 in a superimposed manner. The electronic device may also display a separate virtual keypad, which allows a user to input content through the memo service screen 831, and the call service screen 801 in a superimposed manner.

Then, the electronic device proceeds to operation 305 and stores the memo based on information on the first electronic device. For example, as shown in FIG. 8B, when selection for "store" 833 is detected on the memo service screen 831 according to input information provided through the input device 170, the electronic device stores content of a memo input through the memo service screen 831 such as "Lee & Kwon Intellectual Law Group" 803. The electronic device may also store the content of the memo input through the memo service screen 831 such as a phone number 805 of "Lee & Kwon Intellectual Law Group" 803.

Then, the electronic device terminates the present algorithm.

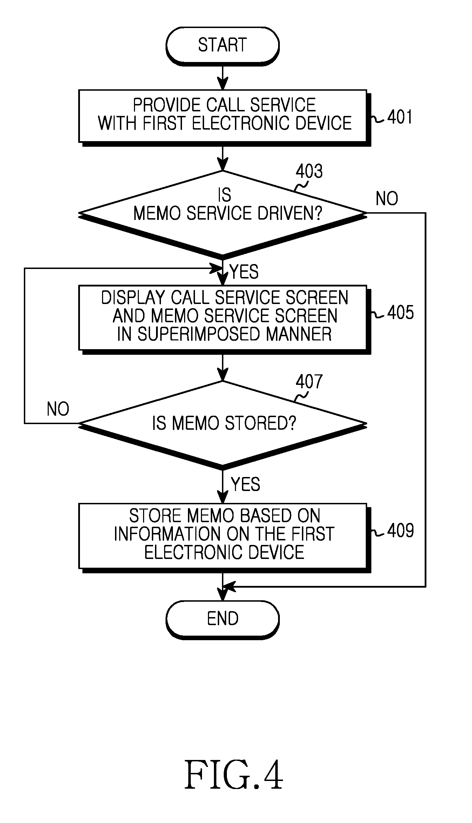

FIG. 4 illustrates a procedure for managing a memo written while providing a call service in an electronic device according to another embodiment of the present disclosure.

Referring to FIG. 4, in operation 401, the electronic device provides call service with the first electronic device. Here, the call service may include at least one of voice call service and video call service. Also, the call service may include at least one of an incoming call and an outgoing call.

Then, the electronic device proceeds to operation 403 and confirms that a driving event for memo service occurs, while providing a call service with the first electronic device. For example, as shown in FIG. 8A, the electronic device confirms that selection for "memo" 815 is detected on a menu screen 807 of the call service screen 801 according to the input information provided through the input device. When the driving event for the memo service does not occur, the electronic device terminates the present algorithm.

Furthermore, when the driving event for the memo service occurs, the electronic device proceeds to operation 405 and displays a call service screen and a memo service screen in a superimposed manner. For example, as shown in FIG. 8A, when selection for "memo" 815 is detected on a menu screen 807 of the call service screen 801, the electronic device, as shown in FIG. 8B, displays the memo service screen 831 and the call service screen 801 in a superimposed manner. The electronic device may display a separate virtual keypad, which allows a user of the electronic device to input content through the memo service screen 831, and the call service screen 801 in a superimposed manner.

When the memo service screen 831 and the call service screen 801 are displayed in a superimposed manner, the electronic device proceeds to operation 407 and confirms that a memo storing event occurs. For example, as shown in FIG. 8B, the electronic device confirms that selection for "store" 833 is detected on the memo service screen 831 according to input information provided through the input device 170. When the memo storing event does not occur, the electronic device proceeds to operation 405 and displays the call service screen and the memo service screen in a superimposed manner.

Furthermore, when the memo storing event occurs, the electronic device proceeds to operation 409, and stores a memo in consideration of information on the first electronic device. For example, as shown in FIG. 8B, when selection for "store" 833 is detected on the memo service screen 831, the electronic device stores content of a memo input through the memo service screen 831 such as "Lee & Kwon Intellectual Law Group" 803. The electronic device may also store the content of the memo input through the memo service screen 831 such as a phone number 805 of "Lee & Kwon Intellectual Law Group" 803.

Then, the electronic device terminates the present algorithm.

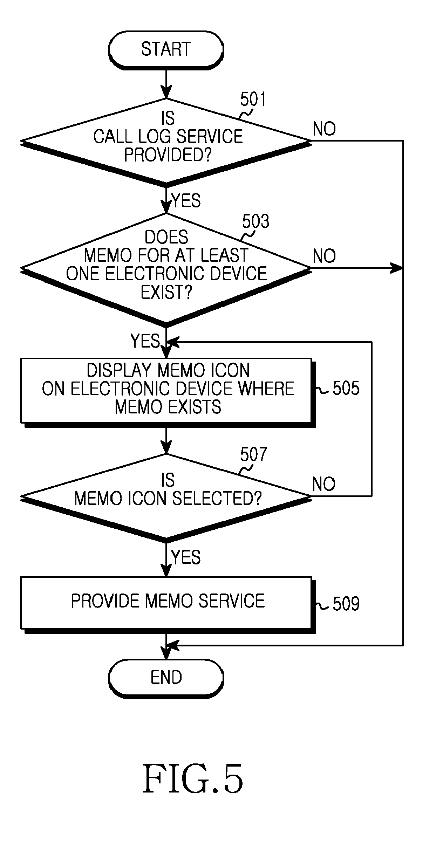

FIG. 5 illustrates a procedure for displaying a memo while providing a call service in an electronic device according to an embodiment of the present disclosure.

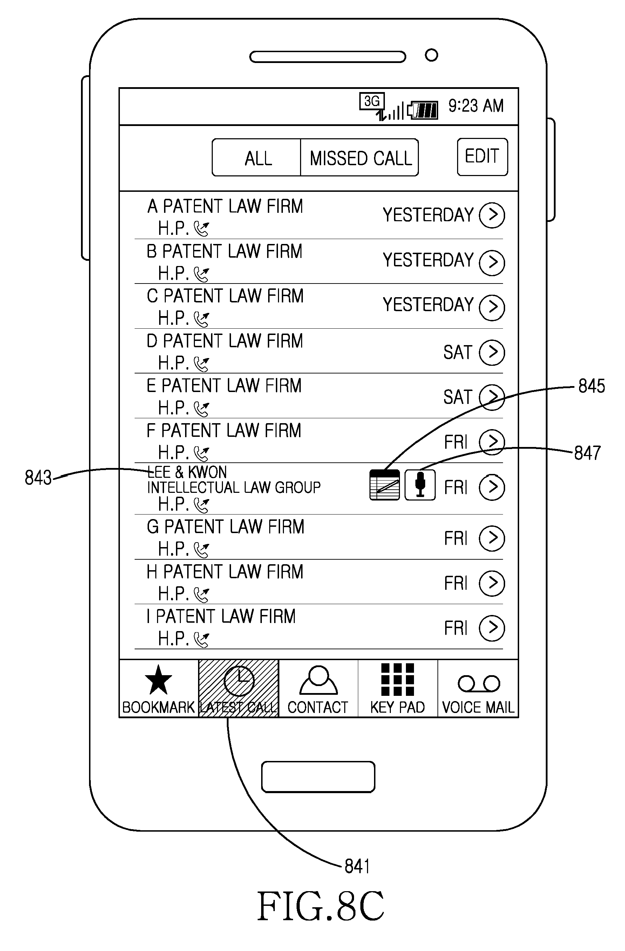

Referring to FIG. 5, in operation 501, the electronic device confirms that call log service is provided. For example, as shown in FIG. 8C, the electronic device confirms that selection for "latest call" 841 is detected according to input information provided through the input device 170. When the call log service is not provided, the electronic device terminates the present algorithm.

Furthermore, when the call log service is provided, the electronic device proceeds to operation 503 and confirms that at least one memo for the electronic device exists. For example, the electronic device confirms that a memo exists which is mapped to at least one of a phone number and a name of a party for providing a call service. When at least one memo for the electronic device does not exist, the electronic device terminates the present algorithm.

When the memo exists, the electronic device continues to operation 505 and displays a memo icon on the electronic device in which the memo exists. For example, as shown in FIG. 8C, when a memo exists which is stored while the electronic device provides call service such as "Lee & Kwon Intellectual Law Group" 843, the electronic device displays at least one of a memo icon 845 and a voice memo icon 847 according to a type of the memo.

Then, the electronic device proceeds to operation 507 and confirms that the memo icon 845 is selected. For example, the electronic device confirms that selection for any one of the memo icon 845 and the voice memo icon 847 is detected. When the memo icon 845 is not selected, the electronic device proceeds to operation 505 and displays a memo icon 845 on an electronic device in which the memo exists.

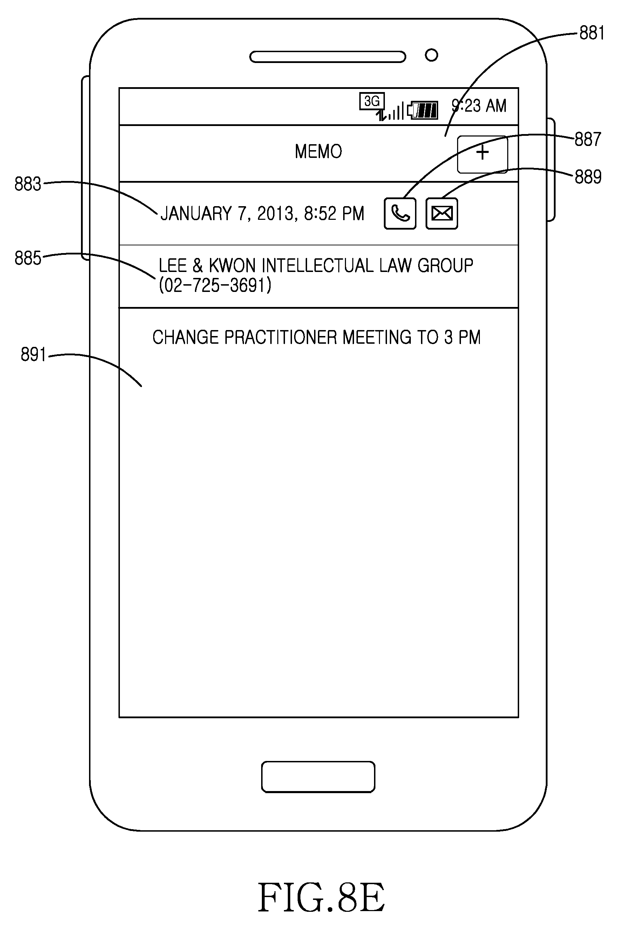

Furthermore, when the memo icon 845 is selected, the electronic device proceeds to operation 509 and provides memo service for the selected memo icon. For example, as shown in FIG. 8C, selection for the memo icon 845 is detected, the electronic device drives a memo service 881 as shown in FIG. 8E. The memo service 881 may include at least one of a time 883 when the memo is stored, information 885 on the called party, memo content 891, a call connection icon 887 and a message transmission icon 889.

Then, the electronic device terminates the present algorithm.

In the above-described embodiments, when providing call log service, the electronic device confirms that memos corresponding to contact information on at least one other party's electronic device exist.

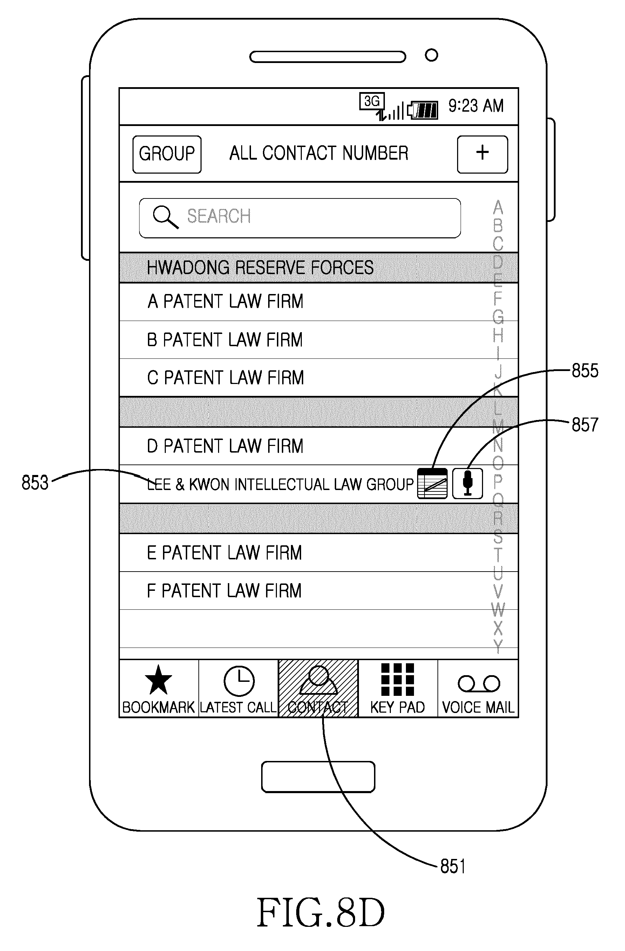

In another embodiment, when providing address book service 805 by selecting the "contact" icon 851, as shown in FIG. 8D, the electronic device may confirm that a memo corresponding to contact information 853 on at least one other party's electronic device is included in the address book. When the memos for the at least one other party's electronic device exist, the electronic device may display at least one icon 855 or 857 according to types of the memos for the other party's electronic device. When selection for an icon is detected, the electronic device may display corresponding memos. For example, when selection for the memo icon 845 is detected, the electronic device drives memo service 881 as shown in FIG. 8E. The memo service 881 may include at least one of the time 883 when the memo is stored, the information 885 on the call to the other party, the memo content 891, the call connection icon 887 and the message transmission icon 889.

In another embodiment, when providing the memo service 881 as shown in FIG. 8E, the electronic device may confirm that memos corresponding to contact information on at least one other party's electronic device. When memos for the at least one other party's electronic device exist, the electronic device may display at least one icon 887 or 889 according to types of the contact information of the other party's electronic device. When selection for an icon is detected, the electronic device may attempt to contact to the other party's electronic device. For example, when a call connection icon 887 is selected, the electronic device attempts to make a call to "Lee & Kwon Intellectual Law Group (02-725-3691)". For another example, when a message transmission icon 889 is selected, the electronic device may attempt a message transmission to "Lee & Kwon Intellectual Law Group (02-725-3691)".

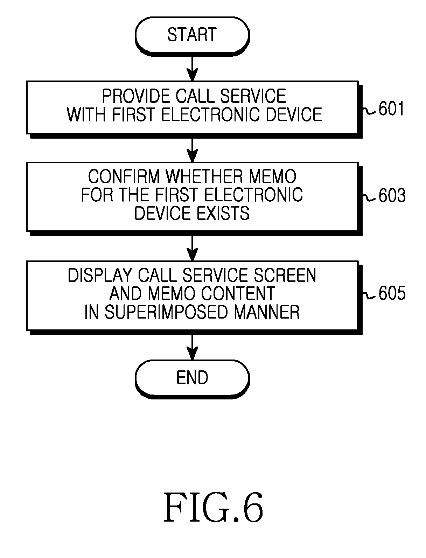

FIG. 6 illustrates a procedure for displaying a memo for the first electronic device when providing a call service in an electronic device according to an embodiment of the present disclosure.

Referring to FIG. 6, the electronic device provides call service with the first electronic device in operation 601. For example, when receiving call data through the communication system 140, the electronic device may confirm at least one of a phone number 805 of the first electronic device and a name 803 stored in the electronic device for the phone number of the first electronic device, as shown in FIG. 8A.

Then, the electronic device proceeds to operation 603 and confirms whether a memo for the first electronic device exists. For example, as shown in FIG. 8A, the electronic device confirms that the memo for at least one of "Lee & Kwon Intellectual Law Group" 803 and "725-3691" 805 exists.

When the memo for the first electronic device exists, the electronic device proceeds to operation 605 and displays a screen of call service and content of the memo in a superimposed manner. For example, as shown in FIG. 8B, the electronic device displays content 831 of a memo for "Lee & Kwon Intellectual Law Group" 803 and the screen 801 of the call service in a superimposed manner. When many memos for the first electronic device exist, the electronic device may display the latest stored memo from among the many memos for the first electronic device. The electronic device may sequentially confirm the memos according to input information provided through the input device 170.

Additionally, when a memo for the first electronic device exists, the electronic device may display at least one of a memo icon 811 and a voice memo icon 813 according to a type of the stored memo as shown in FIG. 8A. Then when selection for the memo icon is detected, the electronic device displays the screen of the call service and content of the memo in a superimposed manner.

Then, the electronic device terminates the present algorithm.

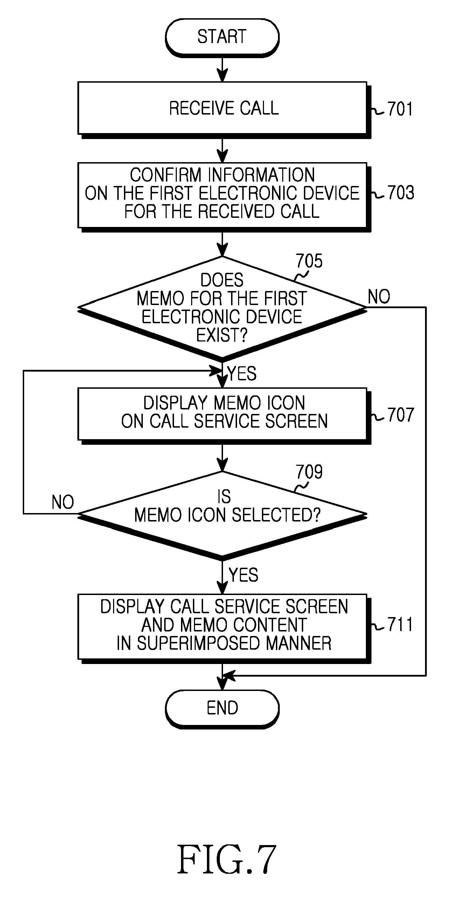

FIG. 7 illustrates a procedure for displaying a memo for the first electronic device when providing a call service in an electronic device according to another embodiment of the present disclosure.

Referring to FIG. 7, in operation 701, the electronic device receives a call. For example, the electronic device confirms that call data is received through the communication system 140.

Then, the electronic device proceeds to operation 703, and confirms information on the first electronic device for the call received in operation 701. For example, when receiving the call, the electronic device may confirm at least one of a phone number 805 of the first electronic device and a name 803 stored in the electronic device for the phone number of the first electronic device.

After confirming information on the first electronic device, the electronic device proceeds to operation 705 and confirms that a memo for the first electronic device exists. For example, the electronic device confirms that a memo for at least one of "Lee & Kwon Intellectual Law Group" 803 and "725-3691" 805 is stored. When the memo for the first electronic device does not exist, the electronic device terminates the present algorithm.

Furthermore, when the memo for the first electronic device exists, the electronic device displays a memo icon on a screen of the call service in operation 707. For example, as shown in FIG. 8A, when a memo for at least one of "Lee & Kwon Intellectual Law Group" 803 and "725-3691" 805 exists, the electronic device displays at least one of the memo icon 811 and the voice memo icon 813 according to a type of the stored memo.

Then, in operation 709, the electronic device confirms that selection for the memo icon 811 is detected. For example, as shown in FIG. 8A, the electronic device confirms that selection for at least one of the memo icon 811 and the voice memo icon 813 is detected according to input information through the input device 170. When the selection for the memo icon 811 is not detected, the electronic device continues to display the memo icon on the screen of the call service as in operation 707.

Furthermore, when the selection for the memo icon 811 is detected, the electronic device proceeds to operation 711 and displays a screen of the call service and content of the memo in a superimposed manner. For example, as shown in FIG. 8A, when the selection for the memo icon 811 is detected, the electronic device displays content 831 of the memo for "Lee & Kwon Intellectual Law Group" 803 and the screen 801 of the call service in a superimposed manner, as shown in FIG. 8B. When many memos for the first electronic device exist, the electronic device may display the latest stored memo from among the memos for the first electronic device. The electronic device may sequentially confirm the memos according to input information provided through the input device 180.

Then, the electronic device terminates the present algorithm.

In the above exemplified embodiments, the electronic device includes a phone number and a name stored in an address book as information of another party's electronic device.

In another embodiment, the electronic device may include at least one of an email address, an IP address, an ID provided by service, and the like as the information on the other party's electronic device.

As described above, the present disclosure allows a user of an electronic device to simultaneously use call service and memo service by displaying a screen of call service and a screen of memo service in a superimposed manner.

In addition, the present disclosure allows a user of an electronic device to efficiently manage memos, by storing the memos written while providing a call service in correspondence with contact information on a call to another party.

It will be appreciated that various embodiments of the present disclosure according to the claims and description in the specification can be realized in the form of hardware, software or a combination of hardware and software. Any such software may be stored in a non-transient computer readable storage medium. The non-transient computer readable storage medium stores one or more programs (software modules), the one or more programs comprising instructions, which when executed by one or more processors in an electronic device, cause the electronic device to perform a method of the present disclosure. Any such software may be stored in the form of volatile or non-volatile storage such as, for example, a storage device like a ROM, whether erasable or rewritable or not, or in the form of memory such as, for example, RAM, memory chips, device or integrated circuits or on an optically or magnetically readable medium such as, for example, a CD, DVD, magnetic disk or magnetic tape or the like. It will be appreciated that the storage devices and storage media are various embodiments of machine-readable storage that are suitable for storing a program or programs comprising instructions that, when executed, implement various embodiments of the present disclosure. Accordingly, various embodiments provide a program comprising code for implementing apparatus or a method as claimed in any one of the claims of this specification and a machine-readable storage storing such a program. Still further, such programs may be conveyed electronically via any medium such as a communication signal carried over a wired or wireless connection and various embodiments suitably encompass the same.

While the present disclosure has been shown and described with reference to various embodiments thereof, it will be understood by those skilled in the art that various changes in form and details may be made therein without departing from the spirit and scope of the present disclosure as defined by the appended claims and their equivalents.

## Claims

1. A method in an electronic device, the method comprising:
generating a memo service while providing a call service to another electronic device;
displaying screens of the call service and the memo service in a superimposed manner; and
when a memo is stored through the memo service, storing the memo including contact information corresponding to the another electronic device.

2. The method of claim 1, wherein the storing of the memo comprises storing the memo by mapping the contact information to the memo.

3. The method of claim 1, wherein the displaying of the screens comprises adjusting transparency of the memo service screen and displaying the memo service screen on the call service screen in a superimposed manner.

4. A method in an electronic device, the method comprising:
providing a call service to another electronic device;
confirming that a memo including contact information corresponding to the another electronic device exists; and
when the memo exists, displaying a screen of the call service and content of the memo in a superimposed manner.

5. The method of claim 4, further comprising, when the memo exists, displaying at least one icon on the call service screen according to a type of the memo.

6. The method of claim 4, wherein the displaying of the screen comprises:
when many memos exist, displaying at least one memo from among the many memos; and
when a preset input for another memo from among the many memos is detected, displaying the another memo except the displayed at least one memo.

7. An electronic device comprising:
a display unit;
at least one processor;
at least one memory; and
at least one program stored in the at least one memory and configured to be executed by the at least one processor,
wherein the at least one processor,
generates a memo service while providing a call service to another electronic device,
displays screens of the call service and the memo service in a superimposed manner, and
when storing a memo through the memo service, stores the memo including contact information of the another electronic device.

8. The electronic device of claim 7, wherein the at least one processor maps the contact information to the memo and stores the memo.

9. The electronic device of claim 7, wherein the display unit adjusts transparency of the memo service screen to display the memo service screen on the call service screen in a superimposed manner.

10. A non-transitory computer-readable storage medium storing a computer program of instructions configured to be readable by at least one processor for instructing the at least one processor to execute a computer process for performing the method of claim 1.
